# EUROPEAN PATENT APPLICATION

(11) **EP 3 809 030 A1**
(43) Date of publication of application: **21.04.2021**
(21) Application number: 19203342.1
(22) Date of filing: 15.10.2019
(51) Int. Cl.: F16L 15/00, F02M 1/00, F16B 1/00, F16L 15/08

(54) **COMBINATION INCLUDING A FITTING OR AN INTERFACE AND A WASHER, METHOD FOR MANUFACTURING A FITTING ASSEMBLY**

(71) Applicant: Vitesco Technologies GmbH, 30165 Hannover (DE)
(72) Inventor: Ricci, Roberto, 57124 Livorno (IT)

(57) **Abstract**

According to a first aspect the invention refers to a combination (1), including a fitting (2) and a gasket (3), in particular for a fitting assembly, wherein the fitting (2) includes a hollow passage (5) which extends through the fitting (2) along a central longitudinal axis (6) of the fitting (2), wherein the fitting (2) is provided with a seat (7) for the gasket and wherein the seat (7) comprises an end surface (8) and a lateral surface (9) extending both around the longitudinal axis (6) of the fitting (2). In order to improve the combination (1) it is suggested by the invention, that the gasket is a washer (3), wherein the washer (3) is fixed to the fitting (2) at the lateral surface (9) by a pressed connection (10). According to a second aspect the invention refers to a combination, including an interface and a gasket, in particular for a fitting assembly, wherein the interface includes a hollow passage which extends through the interface along a central longitudinal axis of the interface, wherein the interface is provided with a seat for the gasket and wherein the seat comprises an end surface and a lateral surface extending both around the longitudinal axis of the interface. In order to improve such a combination it is suggested by the invention that the gasket is a washer, wherein the washer is fixed to the interface at the lateral surface by a pressed connection. According to a third aspect the invention refers to a method for manufacturing a fitting assembly.

## Description

### Technical Field

A first aspect of the invention refers to a combination, including a fitting and a gasket, in particular for a fitting assembly, wherein the fitting includes a hollow passage which extends through the fitting along a central longitudinal axis of the fitting, wherein the fitting is provided with a seat for the gasket and wherein the seat comprises an end surface and a lateral surface extending both around the longitudinal axis of the fitting.

A second aspect of the invention refers to a combination, including an interface and a gasket, in particular for a fitting assembly, wherein the interface includes a hollow passage which extends through the interface along a central longitudinal axis of the interface, wherein the interface is provided with a seat for the gasket and wherein the seat comprises an end surface and a lateral surface extending both around the longitudinal axis of the interface.

A third aspect of the invention refers to a method for manufacturing a fitting assembly, including the step of providing a hydraulic or pneumatic accessory.

### Background Art

In the prior art screwed fittings are used for different purposes. Especially, screwed fitting are used to provide a sealing "metal to metal". In this regard a known problem is the sealing of screwed fittings "metal to metal" with free choice about the material of the two components which are to be coupled. This problem up to now can be solved by adding gaskets or other soft components between the two parts which are to be coupled. However, the disadvantage of this technique is that the added gaskets or added other soft components have to be handled as additional components during the manufacturing of a fitting assembly.

Regarding the prior art reference is also made to US 5 516 156 A which relates to hydraulic port fittings.

### Summary of Invention

Regarding the above described prior art and its disadvantages it is an object of the invention regarding the first aspect to provide and improved combination including a fitting and a gasket and regarding the second aspect to provide an improved combination including an interface and a gasket. Regarding the third aspect it is an object of the invention to provide an improved method for manufacturing a fitting assembly. In particular, it is an object of the invention that by the above improved combinations and method at least some or preferable all of the above mentioned disadvantages can be avoided.

In order to solve the underlying problem the first aspect of the invention suggests that the gasket is a washer wherein the washer is fixed to the fitting at the lateral surface by a pressed connection. By the pressed connection the washer, which has a function of a gasket, can be firmly coupled to the fitting so that these two parts are assembled in a manner that they can be handled like only one part. Accordingly, the manufacturing of a fitting assembly can be facilitated. Preferably, the washer is made of a material having softer material properties compared to the material of the fitting. Accordingly, a combination of the fitting and the fixed washer can be
handled like a unity or like only one part which has a soft material interface (i.e. the washer) to provide or even guarantee an effective and reliable sealing. The material of the washer can be chosen appropriately on regarding the material of the fitting and the material of an interface which are to be coupled together. Accordingly, the invention enables the choice of the materials for the fitting and an interface wherein such choice is not linked to certain seal constraints. This also includes the possibility to combine a fitting made of a first material with an interface made of a second material, wherein the first and the second materials are different from each other and would be critical for a sealing connection if they would be directly contacted "metal to metal" at the sealing contact area. Preferably, the material of the washer has softer material properties compared to the material of the fitting and compared to the material of an interface which is intended to be coupled to the fitting. Accordingly, the washer could be also denoted as a soft material washer.

In a preferred embodiment it is provided that the fitting with regard to its longitudinal axis comprises a first portion, in particular for coupling with an interface, and comprises a second portion, wherein the seat is formed in the first portion, that the first portion of the fitting comprises an external thread, in particular for connection with an internal thread of an interface, and comprises a frontal end surface of the fitting, that the end surface of the seat extends transversely with regard to the longitudinal axis of the fitting, in particular in a plane extending at right angles to the longitudinal axis of the fitting, that the end surface of the seat has a radial inner edge which adjoins a first edge of the lateral surface of the seat, that the lateral surface of the seat has a second edge which adjoins the frontal end surface of the fitting, and that the second portion comprises a fitting connecting means, in particular for connecting with a hydraulic or pneumatic accessory or as an integral connection of a hydraulic or pneumatic component. Further, it is preferred that the combination comprises an interface, wherein the interface includes a hollow passage which extends through the interface along a central longitudinal axis of the interface, that the interface with regard to its longitudinal axis comprises a first portion and a second portion, wherein the first portion of the interface comprises a first opening for inserting the fitting and comprises an internal thread for connection with the external thread of the fitting, and wherein the second portion of the interface comprises an interface connecting means, in particular for connecting with a hydraulic or pneumatic accessory or as an integral connection of a hydraulic or pneumatic component, and that the interface has an internal contact surface which adjoins the hollow passage of the interface, wherein the contact surface is adapted, in particular situated and shaped, to contact und to press the washer, and in particular to deform the washer, when the frontal end surface of the fitting is moved into the first portion of the interface beyond a predetermined axial distance from the first opening of the interface by screwing the external thread into the internal thread, and either that the contact surface surrounds a longitudinal section of the hollow passage of the interface, wherein a cross section of the longitudinal section increases towards the first opening of the interface, wherein in particular the contact surface is shaped conically, or that the contact surface extends transversely with regard to the longitudinal axis of the interface, in particular in a plane extending at right angles to the longitudinal axis of the interface. Regarding such combination the interface may be either separately from the fitting and its fixed washer or may be mounted to the fitting. As mentioned before, it for example is possible that the fitting is coupled to a first hydraulic or pneumatic accessory (like for example a pump, a fuel rail, a pipe or the like), that the interface is coupled to a second hydraulic or pneumatic accessory (like for example a pump, a fuel rail, a pipe or the like) and that the fitting and the interface are connected to each other for coupling the first and second accessories. As an examplary alternative it is possible that the interface is an integral part of a hydraulic or pneumatic component (like for example a pump, a fuel rail, a pipe or the like) and that the fitting is either coupled to a hydraulic or pneumatic accessory (like for example a pump, a fuel rail, a pipe or the like)or is integral part of a hydraulic or pneumatic component (like for example a pump, a fuel rail, a pipe or the like).

Regarding the second aspect in order to solve the underlying object the invention suggests that the gasket is a washer wherein the washer is fixed to the interface at the lateral surface by a pressed connection. Regarding technical effects, advantages and possible modifications reference is made to the above description.

It is preferred that the interface with regard to its longitudinal axis comprises a first portion, in particular for coupling with a fitting, and comprises a second portion, wherein the seat is formed in the first portion of the interface, that the first portion of the interface comprises a first opening, in particular for inserting a fitting, and comprises an internal thread, in particular for connection with an external thread of a fitting, that the end surface of the seat extends transversely with regard to the longitudinal axis of the interface, in particular in a plane extending at right angles to the longitudinal axis of the interface, that the end surface of the seat has a radial inner edge which adjoins a first edge of the lateral surface of the seat, that the lateral surface of the seat has a second edge which faces towards the first opening of the interface, and that the second portion of the interface comprises an interface connecting means, in particular for connecting with a hydraulic or pneumatic accessory or as an integral connection of a hydraulic or pneumatic component. Hydraulic or pneumatic accessories and components for example may be pumps, fuel rails, pipes or other parts. Further, it is possible that the combination comprises a fitting, wherein the fitting includes a hollow passage which extends through the fitting along a central longitudinal axis of the fitting, that the fitting with regard to its longitudinal axis comprises a first portion and a second portion, wherein the first portion of the fitting comprises a frontal end surface and comprises an external thread for connection with the internal thread of the interface, and wherein the second portion of the fitting comprises a fitting connecting means, in particular for connecting with a hyraulic or pneumatic accessory or as an integal connection of a hydraulic or pneumatic component, and that the fitting has an outer contact surface, wherein the contact surface is adapted, in particular situated and shaped, to contact und to press the washer, and in particular to deform the washer, when the frontal end surface of the fitting is moved into the first portion of the interface beyond a predetermined axial distance from the first opening of the interface by screwing the external thread into the internal thread, and either that the contact surface surrounds a longitudinal section of the first portion of the fitting, wherein a cross section of the longitudinal section decreases towards the frontal end surface of the fitting, and in particular wherein the contact surface is shaped conically, or that the contact surface extends transversely with regard to the longitudinal axis of the fitting, in particular in a plane extending a right angles to the longitudinal axis of the fitting.

There are many additional possibilities for performing preferred modifications regarding the first and the second aspect of the invention:
It is possible that the fitting is made of a first material, the interface is made of a second material and the first material is different from the second material, wherein in particular the first material is a first metallic material and wherein in particular the second material is a second metallic material. If, for example, the fitting and the interface are used for coupling a first accessory made of a first material with a second accessory made of a second material, the first and second materials for example may either be different from each other or may be the same.

For a preferable embodiment it is suggested that the pressed connection is made by plastic deformation of the washer achieved by use of a pressing tool, wherein in particular the pressing tool has a negative shape which at least in part is complementary to a shape of the washer at its surface area pressed by the pressing tool. The tool may have a negative shape up to have the external surface designed. Further, it is preferred that the washer is axially supported, in particular pressed, against the end surface of the seat. Regarding the first aspect of the invention it is preferred that the pressed connection is a crimp connection which in particular is made by a crimping tool. Regarding the second aspect of the invention any suitable pressing tool may be used to manufacture the pressed connection.

To provide a functional embodiment it is preferred that the lateral surface of the seat comprises at least one lateral surface section, which in particular has a cylindrical shape or a concave shape or a curved shape. It is also preferred that the lateral surface of the seat is a surface of a wall section and that the wall section forms at least one bump adjacent to one or two of the lateral surface sections, wherein the bump projects over the one or two lateral surface sections and in particular extends around the longitudinal axis. By the bump advantageously a decoupling of the washer from the fitting can be hindered or avoided and the sealing effect between the washer and the fitting can be increased.

It is preferred that the washer is made of metallic material, wherein for example the metallic material consists of copper, copper alloy, soft steel or soft steel alloy or wherein for example the metallic material includes at least one of copper, copper alloy, soft steel or soft steel alloy. Such materials may have softer material properties compared to a great number of materials which are typical for fittings and surfaces. Alternatively, the washer may be made of another material which is suitable for the described purpose.

For a functional embodiment it is also possible that the external thread is screwed into the internal thread so that the contact surface is pressed against the washer, in particular so that the washer is deformed by the contact surface resulting in a contact area between the washer and the contact surface and in particular so that, with the exception of the contact between the internal thread and the external thread, there is no direct contact between the fitting and the interface. If the washer is deformed by the contact surface, a two- or three-dimensional contact area results instead of a one-dimensional contact line and accordingly the sealing effect may be improved by such embodiment.

Finally, in order to overcome its underlying objection the third aspect of the invention suggests that a method for manufacturing a fitting assembly comprises the steps of providing a combination according to the present invention, wherein the first accessory is connected to the second portion of the fitting and thereafter the external thread is screwed into the internal thread so that the contact surface is pressed against the washer, in particular so that the washer is deformed by the contact surface. A fitting assembly achieved by such method may comprise the fitting, the washer, the interface and the first and second accessories and in particular, depending on the requirements, additional components. Regarding technical effects, advantages and possible modifications of the method, reference is also made to the above description.

### Brief Description of Drawings

Exemplary embodiments of the invention are explained in the following with regard to the attached figures. The figures show:
- Fig. 1: in a sectional view and in an enlarged detail view a first exemplary embodiment of a combination according to the invention;
- Fig. 2: in a sectional view a second exemplary embodiment of a combination according to the invention and
- Fig. 3: in a sectional view and in an enlarged detail view a third exemplary embodiment of a combination according to the invention.

### Description of Embodiments

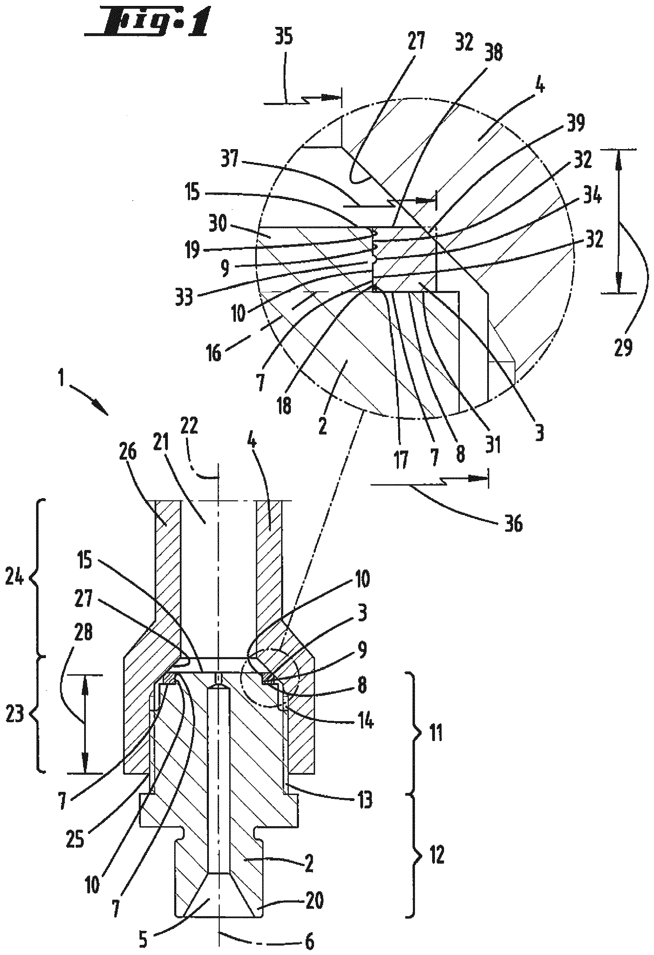

A first exemplary embodiment of a combination 1 according to the invention is described with regard to figure 1. The combination 1 includes a fitting 2, a washer 3 for providing a sealing function and an interface 4. As described in more detail below, figure 1 shows the components in a mounted state. In the example the fitting 2 is an element which is to be connected with a separte hydraulic or pneumatic accessory, which for example may be a pump, a fuel rail for example for an internal combustion engine, a pipe or any other accessory (not shown in the figure). On the other hand, in the example the interface, as schematically indicated by dashed lines, is an integral part of a hydraulic or pneumatic component, which also for example may be a pump, a fuel rail for example for an internal combustion engine, a pipe or the like. Regarding such component, in figure 1 only its interface 2 is depicted. Hence, after coupling the fitting 2 to a separate hydraulic or pneumatic accessory, the combination 1 can be used to connect in a fluid tight manner the separate hydraulic accessory with the hydraulic or pneumatic component whose interface is shown in figure 1.

The fitting 2 includes a hollow passage 5 which extends through the fitting 2 along a central longitudinal axis 6 of the fitting 2. The fitting 2 is provided with a seat 7 for the washer 3. The seat 7 includes an end surface 8 and a lateral surface 9 both extending around the longitudinal axis 6. The washer 3 consists of a metallic material, which in the example is copper. The washer is fixed to the lateral surface 9 by a pressed connection 10.

With regard to its longitudinal axis 6 the fitting 2 comprises a first portion 11 and a second portion 12. The first portion 11 is for coupling with the interface 4 as shown by figure 1, and the second portion 12 is for connecting the fitting 2 to a hydraulic or pneumatic accessory. For assembling the fitting 2 and the interface 4 the fitting 2 has an external thread 13 and the interface 4 has a mating internal thread 14. Further, the fitting 2 forms a frontal end surface 15. The end surface 8 of the seat 7 extends transversely with regard to the longitudinal axis 6 of the fitting 2, wherein in the example the end surface 8 extends in a geometrical plane 16 extending at right angles to the longitudinal axis 6. In the example, i.e. not necessarily, the end surface 8 has a radial inner edge 17 which adjoins a first edge 18 of the lateral surface 9. Further, the lateral surface 9 has a second edge 19 which adjoins the frontal end surface 15. For connecting the second portion 12 of the fitting 2 to a hydraulic or pneumatic accessory the second portion 12 comprises a fitting connecting means 20, which in the example is formed as a socket. At the opposite longitudinal end section of the fitting 2 the seat 7 is formed in the first portion 11.

The interface 4 includes a hollow passage 21 extending through the interface 4 along a central longitudinal axis 22 of the interface 4. With regard to its longitudinal axis 22 the interface 4 comprises a first portion 23 and a second portion 24. With regard to its relative movement during assembly the first portions 11 and 23 are the respective leading portions of the respective elements of a resulting fitting assembly. The first portion 23 comprises a first opening 25 for inserting the fitting 2 during assembly. The opening 25 is the entrance to a longitudinal section of the hollow passage 21 which is provided with the internal thread 14 at its surrounding wall. The interface 4 at its second portion 24 provides an interface connecting means 26 which in the example is formed like a pipe section and which in the example is an integral section of a hydraulic or pneumatic component.

Furthermore, the interface 4 is provided with an internal contact surface 27 which adjoins its hollow passage 21. The contact surface 27 is situated and shaped in a manner so that in the shown mounted situation of the fitting assembly it contacts and deforms the washer 3 because of a pressure which is caused by the internal and external threads 13, 14. As schematically indicated by the enlarged detail view of figure 1 the profile cross section of the washer 3 before contacting the contact surface 27 substantially is rectangular, in the example nearly quadratic. This is indicated by the dashed line at the relevant corner. In addition, in the left part of figure 1 it is shown that for mounting the fitting assembly the fitting 2 has been screwed into the interface 4 so far that the frontal end surface 15 is moved into the first portion 23 of the interface 4 beyond a predetermined axial distance 28 from the first opening 25 of the interface 4. In the example the contact surface 27 surrounds a longitudinal section 29 of the hollow passage 21 and is shaped conically so that the circular cross section of the hollow passage 21 increases towards the first opening 25.

The washer 3 is used as a sealing between the fitting 2 and the interface 4. In order to achieve a fluid tight contact between the fitting 2 and the washer 3 on manufacturing the pressed connection 10 the washer 3 at first has been plugged on the fitting 2 at its axial projection 30 surrounded by the lateral surface 9 so that a leading surface 31 of the washer 3 is pressed against the end surface 8 of the seat 7, and thereafter the washer 3 on using a crimping tool (not shown in the figures) has been crimped to the axial projection 30 by pressing it radially inwardly against the lateral surface 9, so that within the washer 3 a plastic deformation, i.e. a remaining deformation, has occurred. In the example the lateral surface 9 of the seat 7 comprises two lateral surface sections 32 which both have a cylindrical shape. The lateral surface 9 of the seat 7 is a surface of a wall section 33 of the fitting 2 wherein such wall section 33 between the two lateral surface sections 32 forms a bump 34 which projects radially outwards over the two lateral surface sections 32. The enlarged detail view of figure 1 shows that the radial inner surface of the washer 3 on performing the plastic deformation has been adapted to the bump 4. The fitting 2 is made of a first metallic material and the interface 4 is made of a second metallic material which is different from the first metallic material. The material of the washer 3 is softer compared to the material of the fitting 2 and the material of the interface 4.

In the example a minimal radius 35 of the contact surface 27 is smaller compared to an outer radius 37 of the washer 3, and a maximal radius 36 of the contact surface 27 is larger compared to the outer radius 37. Further, in the example a frontal surface 38 of the washer 3 extends within or nearly within a geometrical plane which is defined by the frontal end surface 15. The fluid tight connection between the fitting 2 and the interface 4 is achieved by the fluid tight contact between the washer 3 and the fitting 2 at the end surface 8 and at the lateral surface 9 including the bump 34 and by the fluid tight contact between the washer 3 and the fitting 4 within its common pressed contact area 39.

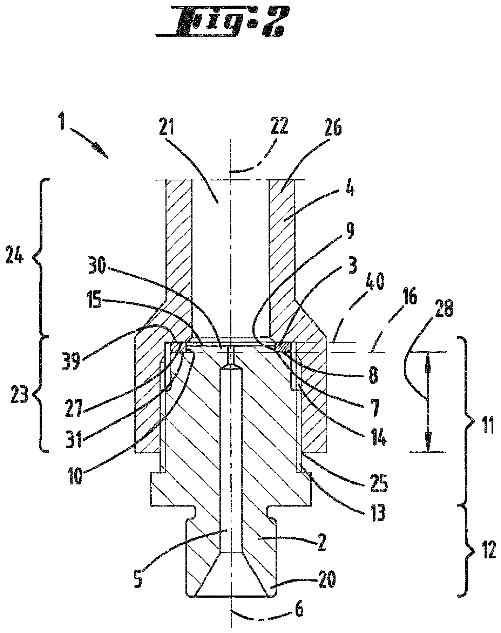

Figure 2 shows a second exemplary embodiment of a combination 1 according to the present invention. Differing from the first exemplary embodiment of figure 1 the contact surface 27 has no conical shape but extends transversely with regard to the longitudinal axis 22 of the interface. In the example the contact surface 27 extends in a geometrical plane 40 which extends at right angles to the longitudinal axis 22 of the interface 4. In figure 2 details and features which correspond or which are similar to figure 1 are designated by the same reference numbers.

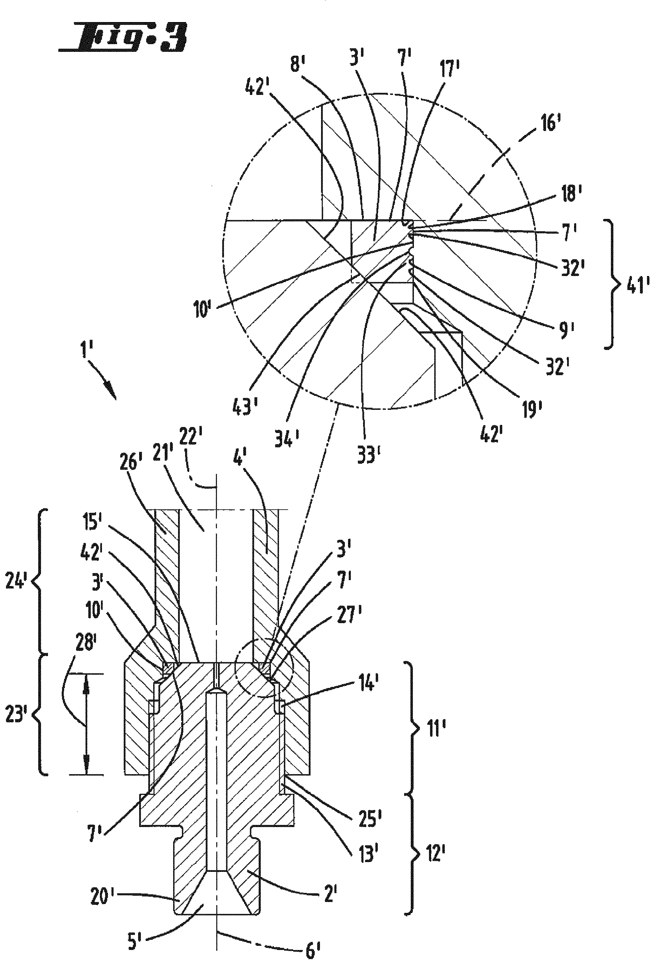

By referring to figure 3 it is described a third exemplary embodiment of a combination 1' according to the invention. The main difference compared to the first and second embodiments is that the washer 3' is fixed to the interface 4' (i.e. not to the fitting) before the fitting 2' and the interface 4' are assembled. Because of this difference in figure 3 the reference numbers are added by a dash ("'", respectively, whereat for details and features which, apart from such difference, correspond or are comparable to those of the first and second embodiments the same numerals are used in the reference numbers.

The interface 4' includes a hollow passage 21' which extends through the interface 4' along a central longitudinal axis 22'. The interface 4' has a seat 7' for the washer 3'. The seat 7' comprises an end surface 8' and a lateral surface 9' both extending around the longitudinal axis 22'. The washer 3' is made of a metallic material which in the example is a soft steel. Further, the washer 3' is fixed to the lateral surface 9' by a pressed connection 10'.

The interface 4' with regard to the longitudinal axis 22' comprises a first portion 23' and a second portion 24'. The first portion 23' is for coupling to the fitting 2' and includes the seat 7' for the washer 3'. Further, the first portion 23' of the interface 4' comprises a first opening 25' for inserting the fitting 2'. At a longitudinal wall section which adjoins the opening 25 the interface 4' comprises an internal thread 14' for screwing onto an external thread 13' of the fitting 2'. The end surface 8' of the seat 7' extends in a plane 16' extending at right angles to the longitudinal axis 22'. The end surface 8' has a radial inner edge 17' which adjoins a first edge 18' of the lateral surface 9'. Further, the lateral surface 9' has a second edge 19' which faces towards the first opening 25'. The second portion 24' of the interface 4' comprises an interface connecting means 26' which is an integrally section of a hydraulic or pneumatic component whose other sections are not shown in figure 3.

The fitting 2' includes a hollow passage 5' which extends through the fitting 2' along a central longitudinal axis 6' of the fitting 2'. With regard to such longitudinal axis 6' the fitting 2' comprises a first portion 11' and a second portion 12'. The first portion 11' comprises a frontal end surface 15 and the external thread 13' for screwing into the internal thread 14' of the interface 4'. The second portion 12' comprises a fitting connection means 20' for connecting with a hydraulic or pneumatic accessory (not shown by figure 3). The fitting 2' has an outer contact surface 42' which is situated and shaped in a manner in order to contact, to press and in particular to deform the washer 3' when, on assembling the components, the frontal end surface 15' is moved into the first portion 23' of the interface 4' beyond a predetermined axial distance 28' from the first opening 25' by screwing the external thread 13' into the internal thread 14'. In the example the contact surface 42' surrounds a longitudinal section 41' of the first portion 1 1' of the fitting 2', wherein a circular cross section of the longitudinal section 41' decreases towards the frontal end surface 15' of the fitting 2' so that the outer contact surface 42' has a conical shape. Similar to the first and second exemplary embodiments the lateral surface 9' comprises two lateral surface sections 32' which are spaced from each other by a bump 34' which extends along a circumference around the longitudinal axis 6', 22'. Figure 3 shows a state after mounting the elements to a fitting assembly; the fitting 2' has been moved so far into the interface 4' that the contact surface 41' has deformed the washer 3' resulting in that a contact area 43' is obtained which extends around the longitudinal axis 6', 22' by its conical shape.

Also in the third exemplary embodiment the fitting 2' is made of a first metallic material and the interface 4' is made of a second metallic material which is different from the first metallic material. The washer 3' is made of a third metallic material which is softer compared to the first and second metallic materials so that the washer 3' could be also denoted as a soft material washer 3'.

All disclosed features are (for its own, but also in combination) relevant for the invention. The features of the dependent claims characterize also independent inventive improvements of the prior art, in particular for filing divisional applications on a basis of these claims.

### Reference Signs List

- 1, 1': combination
- 2, 2': fitting
- 3, 3': washer
- 4, 4': interface
- 5, 5': hollow passage
- 6, 6': longitudinal axis
- 7, 7': seat
- 8, 8': end surface
- 9, 9': lateral surface
- 10, 10': pressed connection
- 11, 11': first portion
- 12, 12': second portion
- 13, 13': external thread
- 14, 14': internal thread
- 15, 15': frontal end surface
- 16, 16': plane
- 17, 17': edge
- 18, 18': edge
- 19, 19': edge
- 20, 20': fitting connecting means
- 21, 21': hollow passage
- 22, 22': longitudinal axis
- 23, 23': first portion
- 24, 24': second portion
- 25, 25': opening
- 26, 26': interface connecting means
- 27: contact surface
- 28, 28': axial distance
- 29: longitudinal section
- 30: axial projection
- 31: leading surface
- 32, 32': lateral surface section
- 33, 33': wall section
- 34, 34': bump
- 35: minimal radius
- 36: maximal radius
- 37: outer radius
- 38: frontal surface
- 39: contact area
- 40: plane
- 41': longitudinal section
- 42': contact surface
- 43': contact area

## Claims

1. Combination (1), including a fitting (2) and a gasket (3), in particular for a fitting assembly,
wherein the fitting (2) includes a hollow passage (5) which extends through the fitting (2) along a central longitudinal axis (6) of the fitting (2),
wherein the fitting (2) is provided with a seat (7) for the gasket and wherein the seat (7) comprises an end surface (8) and a lateral surface (9) extending both around the longitudinal axis (6) of the fitting (2), **characterized in**
**that** the gasket is a washer (3), wherein the washer (3) is fixed to the fitting (2) at the lateral surface (9) by a pressed connection (10).

2. Combination (1) according to claim 1, **characterized in**
**that** the fitting (2) with regard to its longitudinal axis (6) comprises a first portion (11), in particular for coupling with an interface (4), and comprises a second portion (12), wherein the seat (7) is formed in the first portion (11), that the first portion (11) of the fitting (2) comprises an external thread (13), in particular for connection with an internal thread (14) of an interface (4), and comprises a frontal end surface (15) of the fitting (2),
**that** the end surface (8) of the seat (7) extends transversely with regard to the longitudinal axis (6) of the fitting (2), in particular in a plane (16) extending at right angles to the longitudinal axis (6) of the fitting (2), that the end surface (8) of the seat (7) has a radial inner edge (17) which adjoins a first edge (18) of the lateral surface (9) of the seat (7), that the lateral surface (9) of the seat (7) has a second edge (19) which adjoins the frontal end surface (15) of the fitting (2), and
**that** the second portion (12) comprises a fitting connecting means (20), in particular for connecting with a hydraulic or pneumatic accessory or as an integral connection of a hydraulic or pneumatic component.

3. Combination (1) according to claim 2, **characterized in that** the combination comprises an interface (4), wherein the interface (4) includes a hollow passage (21) which extends through the interface (4) along a central longitudinal axis (22) of the interface (4), that the interface (4) with regard to its longitudinal axis (22) comprises a first portion (23) and a second portion (24), wherein the first portion (23) of the interface (4) comprises a first opening (25) for inserting the fitting (2) and comprises an internal thread (14) for connection with the external thread (13) of the fitting (2), and wherein the second portion (24) of the interface (4) comprises an interface connecting means (26), in particular for connecting with a hydraulic or pneumatic accessory or as an integral connection of a hydraulic or pneumatic component, and that the interface (4) has an internal contact surface (27) which adjoins the hollow passage (21) of the interface (4), wherein the contact surface (27) is adapted, in particular situated and shaped, to contact und to press the washer (3), and in particular to deform the washer (3), when the frontal end surface (15) of the fitting (2) is moved into the first portion (23) of the interface (4) beyond a predetermined axial distance (28) from the first opening (25) of the interface (4) by screwing the external thread (13) into the internal thread (14), and either that the contact surface (27) surrounds a longitudinal section (29) of the hollow passage (21) of the interface (4), wherein a cross section of the longitudinal section (29) increases towards the first opening (25) of the interface (4), wherein in particular the contact surface (27) is shaped conically, or that
the contact surface (27) extends transversely with regard to the longitudinal axis (22) of the interface (4), in particular in a plane (40) extending at right angles to the longitudinal axis (22) of the interface (4).

4. Combination (1'), including an interface and a gasket, in particular for a fitting assembly,
wherein the interface (4') includes a hollow passage (21') which extends through the interface (4') along a central longitudinal axis (22') of the interface (4'),
wherein the interface (4) is provided with a seat (7') for the gasket and wherein the seat (7') comprises an end surface (8') and a lateral surface (9') extending both around the longitudinal axis (22') of the interface (4'), **characterized in that** the gasket is a washer (3'), wherein the washer (3') is fixed to the interface (4') at the lateral surface (9') by a pressed connection (10').

5. Combination (1) according to claim 4, **characterized in**
**that** the interface (4') with regard to its longitudinal axis (22') comprises a first portion (23'), in particular for coupling with a fitting (2'), and comprises a second portion (24'), wherein the seat (7') is formed in the first portion (23') of the interface (4'), that the first portion (23') of the interface (4') comprises a first opening (25'), in particular for inserting a fitting (2'), and comprises an internal thread (14'), in particular for connection with an external thread (13') of a fitting (2'),
**that** the end surface (8') of the seat (7') extends transversely with regard to the longitudinal axis (22') of the interface (4'), in particular in a plane (16') extending at right angles to the longitudinal axis (22') of the interface (4'), that the end surface (8') of the seat (7') has a radial inner edge (17') which adjoins a first edge (18') of the lateral surface (9') of the seat (7'),
**that** the lateral surface (9') of the seat (7') has a second edge (19') which faces towards the first opening (25') of the interface (4'), and that the second portion (24') of the interface (4') comprises an interface connecting means (26'), in particular for connecting with a hydraulic or pneumatic accessory or as an integral connection of a hydraulic or pneumatic component.

6. Combination (1') according to claim 5, **characterized in that** the combination (1') comprises a fitting (2'), wherein the fitting (2') includes a hollow passage (5') which extends through the fitting (2') along a central longitudinal axis (6') of the fitting, that the fitting (2') with regard to its longitudinal axis (6') comprises a first portion (11') and a second portion (12'), wherein the first portion (11') of the fitting (2') comprises a frontal end surface (15') and comprises an external thread (13') for connection with the internal thread (14') of the interface (4'), and wherein the second portion (12') of the fitting (2') comprises a fitting connecting means (20'), in particular for connecting with a hydraulic or pneumatic accessory or as an integral connection of a hydraulic or pneumatic component, and that the fitting (2') has an outer contact surface (42'), wherein the contact surface (42') is adapted, in particular situated and shaped, to contact und to press the washer (3'), and in particular to deform the washer (3'), when the frontal end surface (15') of the fitting (2') is moved into the first portion (23') of the interface (4') beyond a predetermined axial distance (28') from the first opening (25') of the interface by screwing the external thread (13') into the internal thread (14'), and either that the contact surface (42') surrounds a longitudinal section (41') of the first portion (11') of the fitting (2'), wherein a cross section of the longitudinal section (41') decreases towards the frontal end surface (15') of the fitting (2'), and in particular wherein the contact surface (42') is shaped conically, or that
the contact surface extends transversely with regard to the longitudinal axis (6') of the fitting (2'), in particular in a plane extending a right angles to the longitudinal axis (6') of the fitting (2').

7. Combination (1, 1') according to one of the preceding claims, **characterized in that** the fitting (2, 2') is made of a first material, the interface (4, 4') is made of a second material and the first material is different from the second material, wherein in particular the first material is a first metallic material and wherein in particular the second material is a second metallic material.

8. Combination (1, 1') according to one of the preceding claims, **characterized in that** the pressed connection (10, 10') is made by plastic deformation of the washer (3, 3') achieved by use of a pressing tool, wherein in particular the pressing tool has a negative shape which at least in part is complementary to a shape of the washer (3, 3') at its surface area pressed by the pressing tool.

9. Combination (1, 1') according to one of the preceding claims, **characterized in that** the washer (3, 3') is axially pressed against the end surface (8, 8') of the seat (7, 7').

10. Combination (1, 1') according to one of the preceding claims, **characterized in that** the pressed connection (10, 10') is a crimp connection which in particular is made by a crimping tool.

11. Combination (1, 1') according to one of the preceding claims, **characterized in that** the lateral surface (9, 9') of the seat (7, 7') comprises at least one lateral surface section (32'), which in particular has a cylindrical shape or a concave shape or a curved shape.

12. Combination (1, 1') according to one of the preceding claims, **characterized in that** the lateral surface (9, 9') of the seat (7, 7') is a surface of a wall section (33, 33') and that the wall section (33, 33') forms at least one bump (34, 34') adjacent to one or two of the lateral surface sections (32, 32'), wherein the bump (34, 34') projects over the one or two lateral surface sections (32, 32') and in particular extends around the longitudinal axis (6, 22').

13. Combination (1, 1') according to one of the preceding claims, **characterized in that** the washer (3, 3') is made of metallic material, wherein in particular the metallic material consists of copper, copper alloy, soft steel or soft steel alloy or wherein in particular the metallic material includes at least one of copper, copper alloy, soft steel or soft steel alloy.

14. Combination (1, 1') according to one of the preceding claims, at least including the features of claim 3 or the features of claim 6, wherein the external thread (13, 13') is screwed into the internal thread (14, 14') so that the contact surface (27, 42') is pressed against the washer (3, 3'), in particular so that the washer (3, 3') is deformed by the contact surface (27, 42') resulting in a contact area (39, 43') between the washer (3, 3') and the contact surface (27, 42') and in particular so that, with the exception of the contact between the internal thread (14, 14') and the external thread (13, 13'), there is no direct contact between the fitting (2, 2') and the interface (4, 4').

15. Method for manufacturing a fitting assembly, including the step of providing a hydraulic or pneumatic accessory, **characterized by** the steps of providing a combination (1, 1') according to one of the preceding claims, including at least the features of claim 3 or claim 6, wherein the accessory is connected to the second portion (12, 12') of the fitting (2, 2') and thereafter the external thread (13') is screwed into the internal thread (14') so that the contact surface (27, 42') is pressed against the washer (3, 3'), in particular so that the washer (3, 3') is deformed by the contact surface (27, 42').
